# EUROPEAN PATENT APPLICATION

(11) **EP 4 624 376 A1**
(43) Date of publication of application: **01.10.2025**
(21) Application number: 24883538.1
(22) Date of filing: 04.06.2024
(51) Int. Cl.: B65G 1/04, B65G 47/91, B23P 19/04, H01M 10/04

(54) **MATERIAL STORAGE APPARATUS, BATTERY ASSEMBLY SYSTEM AND CONTROL METHOD, AND BATTERY PRODUCTION SYSTEM**

(30) Priority: 18.02.2024 CN 202410179109
(71) Applicant: Contemporary Amperex Technology Co., Limited, Jiaocheng District Ningde Fujian 352100 (CN)
(72) Inventor: SUN, Zhiqiang, Ningde, Fujian 352100 (CN); GONG, Xueqing, Ningde, Fujian 352100 (CN); CHEN, Fanke, Ningde, Fujian 352100 (CN); SUN, Yanlin, Ningde, Fujian 352100 (CN)
(74) Representative: Ziebig Hengelhaupt Intellectual Property Attorneys Patentanwaltskanzlei PartGmbB
(86) International application number: PCT/CN2024/097322
(87) International publication number: WO 2025/171697

(57) **Abstract**

The present application relates to a material storage apparatus, a battery assembly system and control method, and a battery production system, in which a first sensing assembly is disposed on the storage bin, and the first sensing assembly is configured to determine whether the assembly apparatus enters the discharging port. When the material storage apparatus does not receive a material discharging instruction, the first sensing assembly is in an activated state, and continuously monitors whether the assembly apparatus enters the discharging port; if detected, the first sensing assembly feeds back a corresponding signal to the control module, and the control module then controls the assembly apparatus to halt, so as to restrict the assembly apparatus from mistakenly entering the accommodating cavity. In this case, material feeding operations can be performed at the feeding port, that is, materials can enter the accommodating cavity through the feeding port for accommodation, thereby achieving safe material feeding. When the material storage apparatus receives the material discharging instruction, the first sensing assembly is in a deactivated state, and in this case, the assembly apparatus can smoothly enter the accommodating cavity through the discharging port for material pickup. This design does not require a dedicated one-to-one space configuration, thereby reducing space occupation, increasing space utilization rate, and lowering assembly cost.

## Description

### RELATED APPLICATION

The present application claims priority to Chinese Patent Application No. 202410179109X field on February 18, 2024, and entitled "MATERIAL STORAGE APPARATUS, BATTERY ASSEMBLY SYSTEM AND CONTROL METHOD, AND BATTERY PRODUCTION SYSTEM", which is incorporated herein by reference in its entirety.

### TECHNICAL FIELD

The present application relates to the technical field of batteries, and in particular, to a material storage apparatus, a battery assembly system and control method, and a battery production system.

### BACKGROUND

With the development of automation technology, the assembly of batteries also gradually adopts automated operations. In the automated operations, due to the structural design limitations of the material storage apparatus, a dedicated one-to-one space configuration is required for material feeding and discharging, resulting in large space occupation and high costs.

### SUMMARY

Based on this, it is necessary to provide a material storage apparatus, a battery assembly system and control method, and a battery production system to reduce the space occupation and assembly cost.

In a first aspect, the present application provides a material storage apparatus. The material storage apparatus includes: a storage bin, being provided with an accommodating cavity, and a feeding port and a discharging port which are in communication with the accommodating cavity, where the feeding port is configured to allow a material to pass through and be accommodated in the accommodating cavity; a first sensing assembly, where the first sensing assembly is disposed on the storage bin and configured to detect an assembly apparatus entering the discharging port, and the first sensing assembly is configured to be in a deactivated state when the material storage apparatus receives a material discharging instruction; and a control module, electrically connected to the first sensing assembly, where the control module controls the assembly apparatus to stop entering the accommodating cavity based on a signal fed back by the first sensing assembly.

In the above material storage apparatus, the first sensing assembly is disposed on the storage bin, and the first sensing assembly is configured to determine whether the assembly apparatus enters the discharging port. When the material storage apparatus does not receive the material discharging instruction, the first sensing assembly is in an activated state, and continuously monitors whether the assembly apparatus enters the discharging port; if detected, the first sensing assembly feeds back a corresponding signal to the control module, and the control module then controls the assembly apparatus to halt, so as to restrict the assembly apparatus from mistakenly entering the accommodating cavity. In this case, material feeding operations can be performed at the feeding port, that is, materials can enter the accommodating cavity through the feeding port for accommodation, thereby achieving safe material feeding. When the material storage apparatus receives the material discharging instruction, the first sensing assembly is in a deactivated state, and in this case, the assembly apparatus can smoothly enter the accommodating cavity through the discharging port for material pickup. This design, by using the first sensing assembly, can establish a safety protection structure at the discharging port of the storage bin for material pickup, such that the material feeding and material discharging can be smoothly completed in the same storage bin, and a dedicated one-to-one space configuration is not required, thereby reducing space occupation, increasing space utilization rate, and lowering assembly cost.

In some embodiments, the first sensing assembly includes a first transmitting end and a first receiving end, the first transmitting end and the first receiving end are respectively disposed on two opposite inner walls of the discharging port, and a signal path between the first transmitting end and the first receiving end is configured to detect the assembly apparatus. This design, through the introduction of the first transmitting end and the first receiving end, facilitates the expansion of the distribution range of the signal path, thereby improving detection accuracy.

In some embodiments, the material storage apparatus further includes a second sensing assembly disposed on the storage bin. The second sensing assembly is configured to detect an object entering the feeding port, and the second sensing assembly is configured to be in a deactivated state when the material storage apparatus receives a material feeding instruction. This design, through the introduction of the second sensing assembly at the feeding port, can establish a protective structure and reduce the risk of operational accidents caused by objects mistakenly entering the storage bin due to improper operation, thereby improving the safety of the assembly process.

In some embodiments, the second sensing assembly includes a second transmitting end and a second receiving end, the second transmitting end and the second receiving end are respectively disposed on two opposite inner walls of the feeding port, and a signal path between the second transmitting end and the second receiving end is at least configured to sense the object entering the feeding port. This design, through the introduction of the second transmitting end and the second receiving end, facilitates the expansion of the distribution range of the signal path, thereby improving detection accuracy.

In some embodiments, the material storage apparatus further includes a handling mechanism, and the handling mechanism is configured to move into or out of the feeding port and transport the material into the accommodating cavity through the feeding port. This design, by using the handling mechanism, facilitates material feeding and is conducive to improving assembly efficiency.

In some embodiments, the material storage apparatus further includes guide members, and the guide members are configured to guide access and withdrawal of the handling mechanism. This design, through the introduction of the guide member, enables the handling mechanism to move into or out of the storage bin more smoothly, thereby reducing the difficulty of manual operation.

In some embodiments, the guide members can be rotatably arranged on one of inner walls of the storage bin and the handling mechanism, and configured to abut against the other in a rolling manner. This design, by configuring the guide member as a rotatable structure, enables rolling guidance between the handling mechanism and the storage bin, thereby reducing friction during the feeding process and further improving feeding convenience.

In some embodiments, the storage bin is provided with guide elements on two opposite sides of the feeding port, and a spacing D between the two guide elements gradually increases from one end of the guide element proximal to the accommodating cavity to another end of the guide element distal to the accommodating cavity. This design enables the handling mechanism to be rapidly pushed into the feeding port, thereby reducing the difficulty of manual operation and improving feeding efficiency.

In some embodiments, the material storage apparatus further includes a positioning assembly, and the positioning assembly is disposed inside the storage bin and configured to position the handling mechanism at a material feeding station. This design, by using the positioning assembly, enables the handling mechanism to be positioned on the material feeding station securely, and thus enables the assembly apparatus to pick up materials accurately, thereby improving the accuracy of the assembly.

In some embodiments, the material storage apparatus further includes a material level detector, and the material level detector is configured to detect the material located at a preset position within the storage bin. This design, by using the material level detector, allows to acquire information of the material in the storage bin promptly, thereby reducing the probability of assembly interruptions caused by material shortages and ensuring stable and continuous assembly operations.

In some embodiments, the material storage apparatus further includes tilt detectors, and the tilt detectors are configured to detect a degree of tilt of the material in the storage bin relative to a horizontal direction. This design, through the introduction of the tilt detector, allows to acquire the state of the material promptly, and facilitates deviation correction of the state of the material, thereby enabling the assembly apparatus to stably pick up materials and improving the reliability of the assembly.

In a second aspect, the present application provides a battery assembly system. The battery assembly system includes: a workbench; the material storage apparatus according to any one of the above aspects; and an assembly apparatus, configured to transfer the material in the storage bin onto the workbench and perform an assembly operation on the material on the workbench.

The battery assembly system described above adopts the above material storage apparatus, in which the first sensing assembly is disposed on the storage bin, and the first sensing assembly is configured to determine whether the assembly apparatus enters the discharging port. When the material storage apparatus does not receive the material discharging instruction, the first sensing assembly is in an activated state, and continuously monitors whether the assembly apparatus enters the discharging port, so as to restrict the assembly apparatus from mistakenly entering the accommodating cavity. In this case, material feeding operations can be performed at the feeding port, that is, materials can enter the accommodating cavity through the feeding port for accommodation, thereby achieving safe material feeding. When the material storage apparatus receives the material discharging instruction, the first sensing assembly is in a deactivated state, and in this case, the assembly apparatus can smoothly enter the accommodating cavity through the discharging port for material pickup. This design, by using the first sensing assembly, can establish a safety protection structure at the discharging port of the storage bin for material pickup, such that the material feeding and material discharging can be smoothly completed in the same storage bin, and a dedicated one-to-one space configuration is not required, thereby reducing space occupation, increasing space utilization rate, and lowering assembly cost.

In some embodiments, the assembly apparatus includes an operating mechanism, a material pickup mechanism, and a tightening mechanism, the operating mechanism can selectively engage with the material pickup mechanism and the tightening mechanism, the operating mechanism transfers the material from the discharging port to the workbench through the material pickup mechanism, and the operating mechanism performs a tightening operation on the material on the workbench through the tightening mechanism. This design allows the operating mechanism to alternately engage with the material pickup mechanism and the tightening mechanism to complete the material pickup operation and the tightening operation, which not only ensures effective assembly operations but also decreases device investment, lowers costs, and reduces space occupation.

In some embodiments, the material pickup mechanism includes a first support and pickup assemblies disposed on the first support, the first support is detachably assembled with the operating mechanism, and the pickup assemblies are configured to pick up or release the material. This design, through the introduction of the first support and the pickup assemblies, enables the pickup assemblies to be fixed securely, thereby facilitating stable material pickup.

In some embodiments, the material pickup mechanism further includes a distance measuring assembly, the distance measuring assembly is disposed on the first support, and the distance measuring assembly is configured to acquire a distance between the pickup assembly and the material to be picked up in the storage bin. This design, by using the distance measuring assembly, enables the acquisition of the distance between the pickup assembly and the material, and facilitates accurate control over the downward movement of the pickup assembly, thereby achieving accurate material pickup.

In some embodiments, the material pickup mechanism further includes first actuators disposed on the first support and supporting members connected to the first actuators, the first actuators are configured to drive the supporting members to move toward or away from the material, and the supporting members are configured to support the material. This design, by using the first actuators to drive the supporting members during the material pickup process, enables the material to be supported stably, thereby reducing the risk of material dropping during the material pickup process.

In some embodiments, the tightening mechanism includes a second support and a tightening assembly disposed on the second support, the second support is detachably assembled with the operating mechanism, and the tightening assembly is configured to rotatably tighten a fastener on the material. This design, through the introduction of the second support and the tightening assembly, enables the tightening assembly to be fixed securely, thereby facilitating a stable tightening operation.

In some embodiments, the tightening mechanism further includes a second actuator, the second actuator is disposed on the second support, and the second actuator is configured to drive the tightening assembly to move on the second support. This design, by using the second actuator to drive the tightening assembly to move during the tightening operation, enables the tightening assembly to be accurately positioned at the designated tightening location, thereby improving the accuracy of the assembly.

In some embodiments, the tightening mechanism further includes a photographing device, and the photographing device is disposed on the second support and configured to acquire location information of the fastener on the material. This design, through the introduction of the photographing device, enables accurate positioning of the designated tightening location, thereby further improving the accuracy of the assembly.

In some embodiments, the battery assembly system further includes a first tooling rack and a first presence detector disposed on the first tooling rack, the first tooling rack is configured to support the material pickup mechanism, and the first presence detector is configured to detect whether the material pickup mechanism is on the first tooling rack. This design, through the introduction of the first tooling rack, enables the material pickup mechanism to be stored securely. Meanwhile, through the introduction of the first presence detector, the presence status of the material pickup mechanism on the first tooling rack can be accurately determined, thereby facilitating the operating mechanism in determining whether to continue to engage with the material pickup mechanism.

In some embodiments, the battery assembly system further includes a second tooling rack and a second presence detector disposed on the second tooling rack, the second tooling rack is configured to support the tightening mechanism, and the second presence detector is configured to detect whether the tightening mechanism is on the second tooling rack. This design, through the introduction of the second tooling rack, enables the tightening mechanism to be stored securely. Meanwhile, through the introduction of the second presence detector, the presence status of the tightening mechanism on the second tooling rack can be accurately determined, thereby facilitating the operating mechanism in determining whether to continue to engage with the tightening mechanism.

In a third aspect, the present application provides a battery assembly control method applied to the battery assembly system according to any one of the above aspects. The battery assembly control method includes the following steps: controlling the first sensing assembly to be in a deactivated state; controlling the assembly apparatus to transfer the material in the storage bin from the discharging port onto the workbench; controlling the first sensing assembly to resume an activated state; and controlling the assembly apparatus to perform an assembly operation on the material on the workbench.

According to the above battery assembly control method, in the assembly process, the first sensing assembly is controlled to be in the deactivated state, such that the assembly apparatus can smoothly enter the storage bin through the discharging port to complete the material pickup operation. After completion of the material pickup, the first sensing assembly is controlled to be in the activated state, so as to restrict the assembly apparatus from mistakenly entering the storage bin; meanwhile, the assembly apparatus is controlled to perform an assembly operation on the material on the workbench. This design, by using the first sensing assembly, can establish a safety control structure at the discharging port of the storage bin for material pickup, such that the material feeding and material discharging can be smoothly completed in the same storage bin, and a dedicated one-to-one space configuration is not required, thereby reducing space occupation, increasing space utilization rate, and lowering assembly cost.

In some embodiments, prior to controlling the first sensing assembly to be in the deactivated state, the method further includes: determining whether the material pickup mechanism of the assembly apparatus is on the first tooling rack; in response to a positive determination, controlling the operating mechanism of the assembly apparatus to engage with the material pickup mechanism; and controlling the operating mechanism to move the material pickup mechanism above the discharging port. This design enables the material pickup process to proceed in an orderly and stable manner, thereby ensuring the stable assembly of the material.

In some embodiments, the step of controlling the assembly apparatus to perform an assembly operation on the material on the workbench includes: controlling the operating mechanism of the assembly apparatus to disengage from the material pickup mechanism of the assembly apparatus; determining whether the tightening mechanism of the assembly apparatus is on the second tooling rack; in response to a positive determination, controlling the operating mechanism to engage with the tightening mechanism and perform a tightening operation on the material on the workbench. This design enables the tightening process to proceed in an orderly and stable manner, thereby ensuring the stable assembly of the material.

In a fourth aspect, the present application provides a battery production system. The battery production system includes the battery assembly system according to any one of the above aspects.

The battery production system described above adopts the above material storage apparatus, in which the first sensing assembly is disposed on the storage bin, and the first sensing assembly is configured to determine whether the assembly apparatus enters the discharging port. When the material storage apparatus does not receive the material discharging instruction, the first sensing assembly is in an activated state, and continuously monitors whether the assembly apparatus enters the discharging port; if detected, the first sensing assembly feeds back a corresponding signal to the control module, and the control module then controls the assembly apparatus to halt, so as to restrict the assembly apparatus from mistakenly entering the accommodating cavity. In this case, material feeding operations can be performed at the feeding port, that is, materials can enter the accommodating cavity through the feeding port for accommodation, thereby achieving safe material feeding. When the material storage apparatus receives the material discharging instruction, the first sensing assembly is in a deactivated state, and in this case, the assembly apparatus can smoothly enter the accommodating cavity through the discharging port for material pickup. This design, by using the first sensing assembly, can establish a safety protection structure at the discharging port of the storage bin for material pickup, such that the material feeding and material discharging can be smoothly completed in the same storage bin, and a dedicated one-to-one space configuration is not required, thereby reducing space occupation, increasing space utilization rate, and lowering assembly cost.

### BRIEF DESCRIPTION OF THE DRAWINGS

To more clearly illustrate the technical solutions in the embodiments of the present application, the drawings required for use in the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a material storage apparatus according to some embodiments of the present application.
FIG. 2 is a diagram of the internal structure of a material storage apparatus according to some embodiments of the present application at a viewing angle.
FIG. 3 is a diagram of the internal structure of a material storage apparatus according to some embodiments of the present application at another viewing angle.
FIG. 4 is a schematic structural diagram of a battery assembly system according to some embodiments of the present application.
FIG. 5 is a diagram of a structure in which a material pickup mechanism cooperates with a first tooling rack according to some embodiments of the present application at a viewing angle.
FIG. 6 is a diagram of a structure in which a material pickup mechanism cooperates with a first tooling rack according to some embodiments of the present application at another viewing angle.
FIG. 7 is a schematic diagram of a structure in which a tightening mechanism cooperates with a second tooling rack according to some embodiments of the present application.
FIG. 8 is a schematic diagram of a material pickup control logic according to some embodiments of the present application.
FIG. 9 is flowchart I of a battery assembly control method according to some embodiments of the present application.
FIG. 10 is flowchart II of a battery assembly control method according to some embodiments of the present application.
FIG. 11 is flowchart III of a battery assembly control method according to some embodiments of the present application.

100, material storage apparatus; 10, storage bin; 11, feeding port; 12, discharging port; 13, accommodating cavity; 14, guide member; 15, guide element; 16, tilt detector; 17, material level detector; 20, first sensing assembly; 21, first transmitting end; 22, first receiving end; 30, second sensing assembly; 31, second transmitting end; 32, second receiving end; 40, positioning assembly; 50, handling mechanism; 51, support platform; 52, roller; 200, workbench; 300, assembly apparatus; 310, operating mechanism; 320, material pickup mechanism; 321, first support; 322, pickup assembly; 323, supporting member; 324, first actuator; 325, distance measuring assembly; 330, tightening mechanism; 331, second support; 332, tightening assembly; 333, second actuator; 334, photographing device; 400, first tooling rack; 410, first presence detector; 500, second tooling rack; 510, second presence detector; 600, material.

### DETAILED DESCRIPTION

To make the aforementioned objects, features, and advantages of the present application more clear and comprehensible, embodiments of the present application will be described in detail hereinafter in conjunction with the drawings. In the following description, numerous specific details are set forth in order to provide a thorough understanding of the present application. However, the present application can be implemented in many different modes other than those described herein, and those skilled in the art can make similar improvements without departing from the spirit of the present application. Therefore, the present application is not limited to the embodiments disclosed hereinafter.

In the description of the present application, it should be understood that if there are technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, the directional or positional relationships indicated by the terms are based on the directional or positional relationships shown in the drawings. They are merely for the convenience of describing the present application and simplifying the description, and are not intended to indicate or imply that the apparatuses or elements referred to must have specific directions, or must be constructed and operated in specific directions. Therefore, these terms should not be construed as limitations on the present application.

In addition, if there are terms "first" and "second", the terms are used for descriptive purposes only and are not to be construed as indicating or implying relative importance or to implicitly indicate the number of technical features indicated. Thus, a feature defined by "first" or "second" may explicitly or implicitly show that at least one such feature is included. In the description of the present application, if there is the term "a plurality of", unless otherwise explicitly defined, the term "a plurality of" means at least two, for example, two, three, and the like.

In the present application, unless otherwise explicitly specified or defined, if there are terms "mount", "link" "connect", "fix", and the like, the terms should be construed broadly. For example, unless otherwise explicitly defined, the terms may refer to fixed connections, detachable connections, or integral formations; mechanical connections or electrical connections; direct connections or indirect connections via an intermediate; or internal communication between two elements or an interaction relationship between two elements. For those of ordinary skill in the art, the specific meanings of the aforementioned terms in the present application can be understood according to specific conditions.

In the present application, unless otherwise explicitly specified or defined, descriptions such as a first feature is "on" or "under" a second feature or other similar descriptions shall be interpreted to mean that the first feature and the second feature are in direct contact, or that the first feature and the second feature are in indirect contact through an intermediate. Moreover, a first feature being "on", "above", and "over" a second feature may indicate that the first feature is right above or obliquely above the second feature, or simply mean that the first feature is at a higher horizontal level than the second feature. A first feature being "under", "beneath", and "below" a second feature may indicate that the first feature is right under or obliquely under the second feature, or may simply indicate that the first feature is at a lower horizontal level than the second feature.

It should be noted that if an element is referred to as being "fixed" or "disposed" on another element, the element may be directly positioned on the other element, or intervening elements may also be present. If an element is considered to be "connected" to another element, the element may be directly connected to the other element, or intervening elements may also be present. Where applicable, terms such as "vertical", "horizontal", "upper", "lower", "left", "right", and other similar descriptions used in the present application are for illustrative purposes only and do not denote the sole implementation.

At present, judging from the development of the market situation, the application of power batteries is becoming broader. Power batteries are not only applied in energy storage power systems such as hydropower, thermal power, wind power, and solar power stations, but are also widely applied in electric transportation vehicles such as electric bicycles, electric motorcycles, and electric cars, as well as in military equipment, aerospace, and other fields. As the application field of power batteries becomes broader, the market demand thereof is also increasing.

With the development of automation technology, the assembly of batteries also gradually adopts automated operations. The structure of a battery generally includes a cover, a bottom plate, and a battery cell accommodated between the cover and the bottom plate. In the automated assembly, the cover is required to be taken out from the material storage apparatus and placed on the bottom plate so as to facilitate the assembly operation. However, in the conventional material storage apparatus, to ensure smooth material feeding and material discharging and reduce conflicts between the material feeding and material discharging operations, a one-to-one configuration is required, where two separate spaces are established: one for the material feeding operation, and the other for the material discharging operation. Additionally, transport devices such as floor rails may be deployed between the two spaces to transport the cover. However, this dedicated one-to-one space configuration results in large space occupation by the apparatus and high assembly operation costs.

Based on this, in view of the issues of large space occupation and the high cost associated with traditional material storage apparatuses, the present application provides a material storage apparatus, in which a first sensing assembly is disposed on the storage bin, and the first sensing assembly is configured to determine whether the assembly apparatus enters the discharging port. When the material storage apparatus does not receive a material discharging instruction, the first sensing assembly is in an activated state, and continuously monitors whether the assembly apparatus enters the discharging port; if detected, the first sensing assembly feeds back a corresponding signal to the control module, and the control module then controls the assembly apparatus to halt, so as to restrict the assembly apparatus from mistakenly entering the accommodating cavity. In this case, material feeding operations can be performed at the feeding port, that is, materials can enter the accommodating cavity through the feeding port for accommodation, thereby achieving safe material feeding. When the material storage apparatus receives the material discharging instruction, the first sensing assembly is in a deactivated state, and in this case, the assembly apparatus can smoothly enter the accommodating cavity through the discharging port for material pickup. This design, by using the first sensing assembly, can establish a safety protection structure at the discharging port of the storage bin for material pickup, such that the material feeding and material discharging can be smoothly completed in the same storage bin, and a dedicated one-to-one space configuration is not required, thereby reducing space occupation, increasing space utilization rate, and lowering assembly cost.

The material storage apparatus provided by the present application can not only be applied to the assembly process of the cover, but also be applied to the assembly of other components, such as the assembly of the bottom plate of a battery and the assembly of a battery cell.

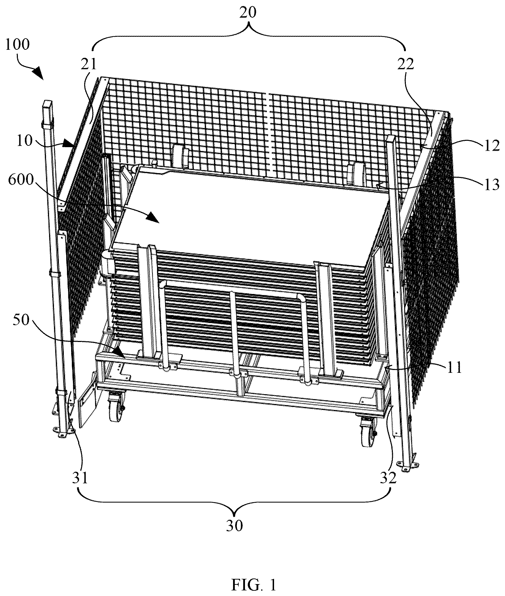

According to some embodiments of the present application, referring to FIG. 1, the present application provides a material storage apparatus 100. The material storage apparatus 100 includes: a storage bin 10, a first sensing assembly 20, and a control module. The storage bin 10 is provided with an accommodating cavity 13, and a feeding port 11 and a discharging port 12 which are in communication with the accommodating cavity 13. The feeding port 11 is configured to allow a material 600 to pass through and be accommodated in the accommodating cavity 13. The first sensing assembly 20 is disposed on the storage bin 10 and configured to detect an assembly apparatus 300 entering the discharging port 12, and the first sensing assembly 20 is configured to be in a deactivated state when the material storage apparatus 100 receives a material discharging instruction. The control module is electrically connected to the first sensing assembly 20, and the control module controls the assembly apparatus 300 to stop entering the accommodating cavity 13 based on a signal fed back by the first sensing assembly 20.

The storage bin 10 refers to a structure that allows the material 600 to be accommodated in its interior through the feeding port 11 and also allows the assembly apparatus 300 to take out the material 600 through the discharging port 12. The shape of the storage bin may be designed in multiple ways. For example, it may be designed into a region formed by surrounding fences; or it may also be designed into a box structure with the feeding port 11 and the discharging port 12. The material 600 may not be limited to components in a battery, such as the cover of the battery, and may also be other components to be processed.

In terms of the distribution of the feeding port 11 and the discharging port 12 on the storage bin 10, the two ports may be arranged on different sides of the storage bin 10. For example, as shown in FIG. 1, the feeding port 11 may be disposed at the front of the storage bin 10, and the discharging port 12 may be disposed at the top of the storage bin 10.

The first sensing assembly 20 refers to a device capable of detecting the assembly apparatus 300 at the discharging port 12, and the first sensing assembly 20, when detecting the assembly apparatus 300 at the discharging port 12, can restrict the assembly apparatus 300 from moving into the accommodating cavity 13. For example, the first sensing assembly 20 is electrically connected to the control module, and the first sensing assembly 20, when detecting the assembly apparatus 300, transmits a signal to the control module. The control module then controls the assembly apparatus 300 to stop moving based on the signal, or de-energizes the assembly apparatus 300 to stop it from entering the accommodating cavity 13. Certainly, after being stopped from entering the accommodating cavity 13, the assembly apparatus 300 can further be controlled to move away from the discharging port 12. The assembly apparatus 300 refers to a device that can take out the material 600 and perform an assembly operation thereon.

To further improve safety, a warning device, such as an indicator light and an alarm, may be provided. When the first sensing assembly 20 detects the assembly apparatus 300 at the discharging port 12, the warning device emits light or an alarm sound.

The first sensing assembly 20 may be of various types. For example, the first sensing assembly 20 may be, but is not limited to, a photosensitive sensor, a light curtain, a pressure-sensitive sensor, or the like. Meanwhile, the control module may be, but is not limited to, an industrial personal computer, a single-chip microcomputer, an electronic control unit, or the like.

In addition, the first sensing assembly 20, when in an activated state, can detect the assembly apparatus 300 at the discharging port 12; the sensing assembly, when in a deactivated state, cannot detect the assembly apparatus 300 at the discharging port 12, and in this case, the discharging port 12 is in an open state, allowing the assembly apparatus 300 to freely move into or out of the discharging port 12. The operating state of the first sensing assembly 20 can be switched based on different scenarios. For example, if the material storage apparatus 100 does not receive the material discharging instruction, the first sensing assembly 20 is controlled to be in an activated state; if the assembly apparatus 300 is detected at the discharging port 12, the first sensing assembly feeds back a corresponding signal to the control module, and the control module then controls the assembly apparatus to halt, so as to restrict the access and withdrawal of the assembly apparatus 300 and reduce the risk of operational accidents caused by the improper operation of the assembly apparatus 300. When the material storage apparatus 100 receives the material discharging instruction, it indicates that the storage bin 10 has completed the material feeding operation, and in this case, the first sensing assembly 20 is in a deactivated state and allows the assembly apparatus 300 to freely move into or out of the discharging port 12 to complete the material pickup operation smoothly.

The trigger mode of the material discharging instruction may be designed in multiple ways. For example, an operator may touch and control a button, a switch, or other components to enable the material storage apparatus 100 to acquire a corresponding signal; or, the corresponding material discharging signal may be automatically transmitted based on the degree of completion of the assembly operation by the assembly apparatus 300.

It should be noted that the distribution of the first sensing assembly 20 on the storage bin 10 may be designed in multiple ways, as long as the first sensing assembly 20 can detect the assembly apparatus 300 entering the discharging port 12. For example, the first sensing assembly 20 may be fixed on a part of the storage bin 10 proximal to the discharging port 12; or, the first sensing assembly 20 may be fixed above the discharging port 12, with the sensing end of the first sensing assembly 20 positioned adjacent to or extending into the discharging port 12.

This design, by using the first sensing assembly 20, can establish a safety control structure at the discharging port 12 of the storage bin 10 for material pickup, such that the material feeding and material discharging can be smoothly completed in the same storage bin 10, and a dedicated one-to-one space configuration is not required, thereby reducing space occupation, increasing space utilization rate, and lowering assembly cost.

According to some embodiments of the present application, referring to FIG. 1, the first sensing assembly 20 includes a first transmitting end 21 and a first receiving end 22. The first transmitting end 21 and the first receiving end 22 are respectively disposed on two opposite inner walls of the discharging port 12, and a signal path between the first transmitting end 21 and the first receiving end 22 is configured to detect the assembly apparatus 300.

The first transmitting end 21 refers to a component in the first sensing assembly 20 that is capable of transmitting a signal, and the first receiving end 22 refers to a component in the first sensing assembly 20 that is capable of receiving a signal. A signal path, such as an infrared light path or an ultraviolet light path, is formed between the two ends. Specifically, in some embodiments, the first sensing assembly 20 may be a light curtain.

The first transmitting end 21 and the first receiving end 22 are respectively disposed on two opposite inner walls of the discharging port 12, such that the signal path between the two ends can span across the whole discharging port 12. In this case, if the assembly apparatus 300 enters the discharging port 12, it can be readily detected, thereby enabling the timely prevention of the assembly apparatus 300 from further entering.

In some examples, the first transmitting end 21 and the first receiving end 22 may be respectively connected to the inner walls of the discharging port 12 by, but not limited to, a bolting connection, a snap-fit connection, a riveting connection, a welding connection, a bonding connection, or the like.

This design, through the introduction of the first transmitting end 21 and the first receiving end 22, facilitates the expansion of the distribution range of the signal path, thereby improving detection accuracy.

According to some embodiments of the present application, referring to FIG. 1, the material storage apparatus 100 further includes a second sensing assembly 30 electrically connected to the control module. The second sensing assembly 30 is configured to detect an object entering the feeding port 11, and the second sensing assembly 30 is configured to be in a deactivated state when the material storage apparatus 100 receives a material feeding instruction.

The second sensing assembly 30 refers to a device capable of detecting an object at the feeding port 11, and the second sensing assembly 30, when detecting an object entering the feeding port 11, can transmit a corresponding signal to the control module. For example, the second sensing assembly 30 is electrically connected to the control module, and the second sensing assembly 30, when detecting an object, transmits a signal to the control module. In this case, a corresponding warning device, such as an indicator light and an alarm, may be provided at the feeding port 11. When the second sensing assembly 30 detects an object at the feeding port 11, the warning device emits light or an alarm sound. The object may be any object, such as an operator, the material 600, and a device for transporting the material 600.

The second sensing assembly 30 may be of various types. For example, the second sensing assembly 30 may be, but is not limited to, a photosensitive sensor, a light curtain, a pressure-sensitive sensor, or the like. Meanwhile, the control module may be, but is not limited to, an industrial personal computer, a single-chip microcomputer, an electronic control unit, or the like.

In addition, the second sensing assembly 30, when in an activated state, can detect the object in the feeding port 11; the second sensing assembly, when in a deactivated state, cannot detect the object in the feeding port 11, and in this case, the feeding port 11 is in an open state, allowing the object to freely move into or out of the feeding port 11. The operating state of the second sensing assembly 30 can be switched based on different scenarios. For example, if the material storage apparatus 100 does not receive the material feeding instruction, the second sensing assembly 30 is controlled to be in the activated state, so as to restrict the access and withdrawal of the object and reduce the risk of operational accidents caused by the improper operation of the object. If the material storage apparatus 100 receives the material feeding instruction, it indicates that the storage bin 10 has completed the material feeding operation, and in this case, the second sensing assembly 30 is in a deactivated state and allows the object to freely move into or out of the feeding port 11 to complete the material feeding operation smoothly.

The trigger mode of the material feeding instruction may be designed in multiple ways. For example, an operator may touch and control a button, a switch, or other components to enable the material storage apparatus 100 to acquire a corresponding signal; or, the corresponding material feeding signal may be automatically transmitted based on the degree of completion of the assembly operation by the object.

This design, through the introduction of the second sensing assembly 30 at the feeding port 11, can establish a protective structure and reduce the risk of operational accidents caused by objects mistakenly entering the storage bin 10, thereby improving the safety of the assembly process.

According to some embodiments of the present application, referring to FIG. 1, the second sensing assembly 30 includes a second transmitting end 31 and a second receiving end 32. The second transmitting end 31 and the second receiving end 32 are respectively disposed on two opposite inner walls of the feeding port 11, and a signal path between the second transmitting end 31 and the second receiving end 32 is at least configured to sense the object entering the feeding port 11.

The second transmitting end 31 refers to a component in the second sensing assembly 30 that is capable of transmitting a signal, the second receiving end 32 refers to a component in the second sensing assembly 30 that is capable of receiving a signal. A signal path, such as an infrared light path or an ultraviolet light path, is formed between the two ends. Specifically, in some embodiments, the second sensing assembly 30 may be a light curtain.

The second transmitting end 31 and the second receiving end 32 are respectively disposed on two opposite inner walls of the feeding port 11, such that the signal path between the two ends can span across the whole feeding port 11. In this case, if the object enters the feeding port 11, it can be readily detected, thereby achieving a prompt warning effect.

The second transmitting end 31 and the second receiving end 32 may be respectively connected to the inner walls of the feeding port 11 by, but not limited to, a bolting connection, a snap-fit connection, a riveting connection, a welding connection, a bonding connection, or the like.

This design, through the introduction of the second transmitting end 31 and the second receiving end 32, facilitates the expansion of the distribution range of the signal path, thereby improving detection accuracy.

According to some embodiments of the present application, referring to FIG. 1, the material storage apparatus 100 further includes a handling mechanism 50. The handling mechanism 50 is configured to move into or out of the feeding port 11 and transport the material 600 into the accommodating cavity 13 through the feeding port 11.

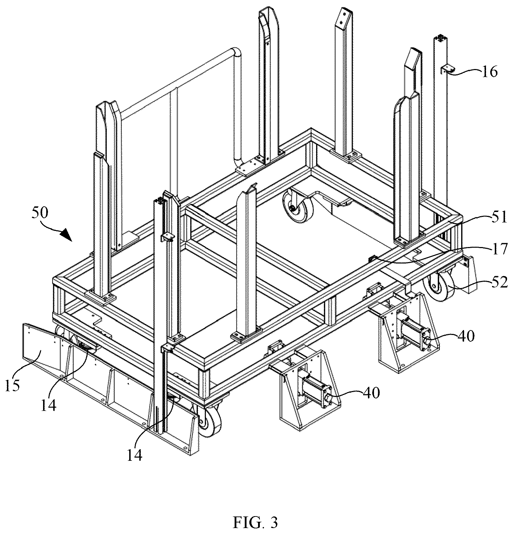

The handling mechanism 50 refers to a device configured to transport the material 600 into the accommodating cavity 13, which may be designed into, but is not limited to, a cart structure, an automated guided vehicle (AGV) cart, a forklift, or the like. When the handling mechanism 50 fully loaded with the material 600 moves to the accommodating cavity 13, it may unload the material 600 into the accommodating cavity 13 or remain inside the accommodating cavity 13 to serve as a support structure for the material 600. To better support the material 600, referring to FIG. 3, the handling mechanism 50 may include a support platform 51 and rollers 52 disposed at the bottom of the support platform 51, and the material 600 may be placed on the support platform 51. The support platform 51 may be designed as a frame structure, such as a square frame, on which the material 600 can be stacked. In addition, the support platform 51 may also be designed as other structures, such as a plate-like structure.

During the material feeding process, if the second sensing assembly 30 is provided at the feeding port 11, a material feeding instruction, for example, by operating a touch button or a switch, may be transmitted to the material storage apparatus 100 to deactivate the second sensing assembly 30, thereby suspending its operation. In this case, the unloaded handling mechanism 50 can be pulled out from the feeding port 11, and a fully loaded handling mechanism 50 can be pushed into the accommodating cavity 13.

This design, by using the handling mechanism 50, facilitates material feeding and is conducive to improving assembly efficiency.

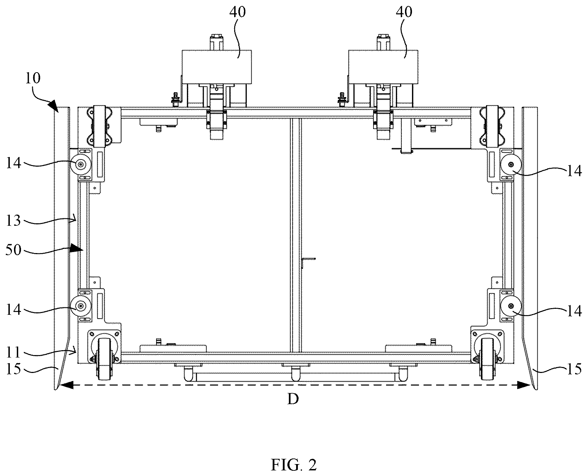

According to some embodiments of the present application, referring to FIG. 2, the material storage apparatus 100 further includes guide members 14. The guide members 14 are configured to guide the access and withdrawal of the handling mechanism 50.

The guide member 14 refers to a component capable of guiding the access and withdrawal of the handling mechanism 50. For example, the guide member may be designed as a rail-and-slider assembly or a guide wheel structure.

This design, through the introduction of the guide member 14, enables the handling mechanism 50 to move into or out of the storage bin 10 more smoothly, thereby reducing the difficulty of manual operation.

According to some embodiments of the present application, referring to FIG. 2, the guide members 14 can be rotatably arranged on one of the inner walls of the storage bin 10 and the handling mechanism 50, and configured to abut against the other in a rolling manner.

The guide members 14 can be rotatably arranged on the inner walls of the storage bin 10 and abut against the handling mechanism 50 in a rolling manner; or, the guide members 14 can be rotatably arranged on the handling mechanism 50 and abut against the inner walls of the storage bin 10 in a rolling manner. The guide member 14 may be designed as a roller structure or a cylindrical roller shaft structure. Additionally, the guide member may also be designed as a ball bearing.

The guide members 14 are provided on at least one side in a direction intersecting the access and withdrawal direction of the handling mechanism 50. For example, the guide members 14 are provided between one side of the handling mechanism 50 and the inner wall of the storage bin 10; or, the guide members 14 are provided between both sides of the handling mechanism 50 and the inner walls of the storage bin 10.

In addition, on any side in the direction intersecting the access and withdrawal direction of the handling mechanism 50, one guide member 14 or a plurality of guide members 14 may be provided between the handling mechanism 50 and the inner wall of the storage bin 10.

This design, by configuring the guide members 14 as a rotatable structure, enables rolling guidance between the handling mechanism 50 and the storage bin 10, thereby reducing friction during the material feeding process and further improving feeding convenience.

According to some embodiments of the present application, referring to FIG. 2, the storage bin 10 is provided with guide elements 15 on opposite sides of the feeding port 11. The spacing D between the two guide elements 15 gradually increases from one end of the guide element 15 proximal to the accommodating cavity 13 to another end of the guide element 15 distal to the accommodating cavity 13.

The guide element 15 refers to a structure for guiding the movement of the handling mechanism 50, which may be designed as a plate-like structure. When two guide elements 15 are arranged at the feeding port 11, the two guide elements 15 form an expanding structure at the feeding port 11, thereby facilitating the guidance of the handling mechanism 50 into the feeding port 11.

This design enables the handling mechanism 50 to be rapidly pushed into the feeding port 11, thereby reducing the difficulty of manual operation and improving feeding efficiency.

According to some embodiments of the present application, referring to FIG. 3, the material storage apparatus 100 further includes a positioning assembly 40. The positioning assembly 40 is disposed inside the storage bin 10 and configured to position the handling mechanism 50 at a material feeding station.

It can be seen that when the fully loaded handling mechanism 50 moves into the storage bin 10, the handling mechanism remains inside the storage bin 10 to serve as a support structure for the material 600. The positioning assembly 40 refers to a device configured to stably hold the handling mechanism 50 at the material feeding station, which may be, but is not limited to, a clamping cylinder, an electromagnet, a latch structure, or the like.

One or a plurality of positioning assemblies 40 may be provided. When a plurality of positioning assemblies 40 are provided, at least two positioning assemblies 40 may be spaced apart along a preset direction, such that the handling mechanism 50 is substantially symmetrically fixed, thereby reducing positional deviation when the handling mechanism 50 is stationed. The preset direction intersects a plane formed by the access and withdrawal direction of the handling mechanism and the height direction of the material storage apparatus 100.

This design, by using the positioning assembly 40, enables the handling mechanism 50 to be positioned on the material feeding station securely, and thus enables the assembly apparatus 300 to pick up materials accurately, thereby improving the accuracy of the assembly.

According to some embodiments of the present application, referring to FIG. 3, the material storage apparatus 100 further includes a material level detector 17, and the material level detector 17 is configured to detect the material 600 located at a preset position within the storage bin 10.

The material level detector 17 refers to a device capable of detecting the material 600 located at a preset position, which may be, but is not limited to, a pressure-sensitive sensor, a photosensitive sensor, or the like. The preset position may be determined based on actual detection. For example, the preset position may correspond to the location of the material 600 at the uppermost layer under the full-load condition, or the preset position may also correspond to the location of the material 600 at the lowermost layer. When the preset position corresponds to the location of the material 600 at the lowermost layer and the material 600 is not detected, it indicates a material shortage, requiring timely replenishment of the material 600 into the storage bin 10. When the preset position corresponds to the location of the material 600 at the uppermost layer, it indicates completion of feeding, at which time the operation of the second sensing assembly 30 at the feeding port 11 may be reactivated.

This design, by using the material level detector 17, allows to acquire information of the material 600 in the storage bin 10 promptly, thereby reducing the probability of assembly interruptions caused by material shortages and ensuring stable and continuous assembly operations.

According to some embodiments of the present application, referring to FIG. 3, the material storage apparatus 100 further includes tilt detectors 16, and the tilt detectors 16 are configured to detect a degree of tilt of the material 600 in the storage bin 10 relative to a horizontal direction.

The tilt detector 16 refers to a device capable of detecting whether the material 600 in the storage bin 10 is tilted, which for example, may be an inclinometer or a visible-light emitting device that compares emitted light with the material 600. In the case that the material 600 in the storage bin 10 is tilted relative to the horizontal direction, the assembly apparatus 300 may experience insufficient gripping force during material pickup due to unevenness, thereby resulting in unstable gripping of the material 600.

The distribution of the tilt detectors 16 inside the storage bin 10 may be designed in multiple ways. For example, the tilt detectors 16 may be disposed at a position corresponding to the uppermost layer of the material 600 to detect the tilt of the material 600 under the full-load condition; or, the tilt detectors 16 may also be disposed at a position corresponding to the lowermost layer of the material 600 to detect the tilt of the material 600 when there is a material shortage at the bottom layer. Specifically, in some embodiments, at least two tilt detectors 16 are provided; one of the tilt detectors 16 is configured to detect the tilt of the material 600 at the uppermost layer, and the other tilt detector 16 is configured to detect the tilt of the material 600 at the lowermost layer.

This design, through the introduction of the tilt detector 16, allows to acquire the state of the material 600 promptly, and facilitates deviation correction of the state of the material 600, thereby enabling the assembly apparatus 300 to stably pick up the material 600 and improving the reliability of the assembly.

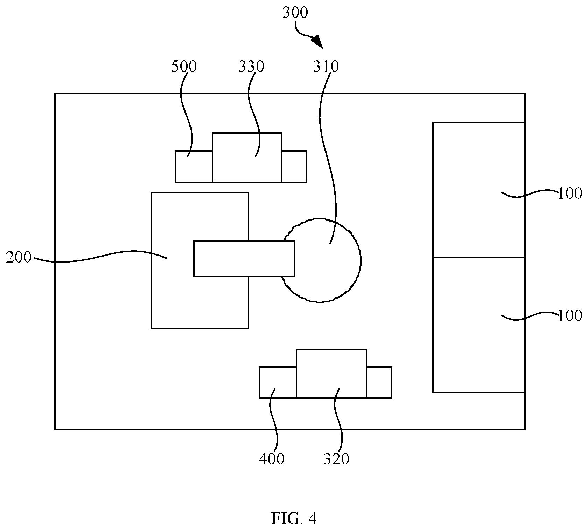

According to some embodiments of the present application, referring to FIG. 4, the present application provides a battery assembly system. The battery assembly system includes: a workbench 200, an assembly apparatus 300, and the material storage apparatus 100 according to any one of the above aspects. The assembly apparatus 300 is configured to transfer the material 600 in the storage bin 10 onto the workbench 200 and perform an assembly operation on the material 600 on the workbench 200.

The workbench 200 refers to a structure that is capable of supporting the material 600 and providing an operation place for the assembly of the material 600, which may be designed as a support structure, a table structure, or the like.

The assembly apparatus 300 refers to a device that can take out the material 600 from the storage bin 10 and place the material 600 on the workbench 200, and can also perform an assembly operation on the material 600. To achieve both the material pickup operation and the assembly operation, the assembly apparatus 300 may be designed as two separate devices, such as a material pickup device and an assembly device. Additionally, the assembly apparatus may also be designed as a robotic arm, a replaceable material pickup tooling and assembly tooling, or the like.

The assembly operation refers to an action implemented based on the assembly requirement of the material 600, which may include: a tightening operation, a welding operation, a pressing operation, or the like.

The battery assembly system described above adopts the above material storage apparatus 100, in which the first sensing assembly 20 is disposed on the storage bin 10, and the first sensing assembly 20 is configured to determine whether the assembly apparatus 300 enters the discharging port 12. This design, by using the first sensing assembly 20, can establish a safety control structure at the discharging port 12 of the storage bin 10 for material pickup, such that the material feeding and material discharging can be smoothly completed in the same storage bin 10, and a dedicated one-to-one space configuration is not required, thereby reducing space occupation, increasing space utilization rate, and lowering assembly cost.

According to some embodiments of the present application, referring to FIG. 4, the assembly apparatus 300 includes an operating mechanism 310, a material pickup mechanism 320, and a tightening mechanism 330. The operating mechanism 310 can selectively engage with the material pickup mechanism 320 and the tightening mechanism 330, the operating mechanism 310 transfers the material 600 from the discharging port 12 to the workbench 200 through the material pickup mechanism 320, and the operating mechanism 310 performs a tightening operation on the material 600 on the workbench 200 through the tightening mechanism 330.

The material pickup mechanism 320 refers to a device capable of picking up or releasing the material 600, and the pickup method may vary, such as magnetic attraction, gripping, and vacuum suction. Specifically, in some embodiments, the material pickup mechanism 320 may include a suction cup.

The tightening mechanism 330 refers to a device configured to perform a tightening operation on the components of the material 600 that require fastening, such as bolts on the material 600.

The operating mechanism 310 refers to a device with mobility that is capable of alternately engaging with the material pickup mechanism 320 and the tightening mechanism 330, which may be, but is not limited to, a robotic arm, a linear module structure with independent XYZ-axis movement, or the like. The operating mechanism 310 switches its configuration between the material pickup mechanism 320 and the tightening mechanism 330, such that the material pickup operation and the tightening operation can be completed. Compared to the configuration of a separate material pickup device and a tightening device, the shared use of the operating mechanism 310 in the embodiments can decrease device investment, lower costs, and also facilitate in reducing space occupation.

To achieve rapid configuration switching between the material pickup mechanism 320 and the tightening mechanism 330, the material pickup mechanism 320 and the tightening mechanism 330 may each be provided with a quick-change plate. When one end of the operating mechanism 310 is inserted into the quick-change plate, the latch structure in the quick-change plate is clamped onto the end of the operating mechanism 310 under the action of a pneumatic cylinder. Additionally, various quick-change methods may be employed, such as electromagnetic attraction and a combination of a gripper and a pneumatic cylinder.

This design allows the operating mechanism 310 to alternately engage with the material pickup mechanism 320 and the tightening mechanism 330 to complete the material pickup operation and the tightening operation, which not only ensures effective assembly operations but also decreases device investment, lowers costs, and reduces space occupation.

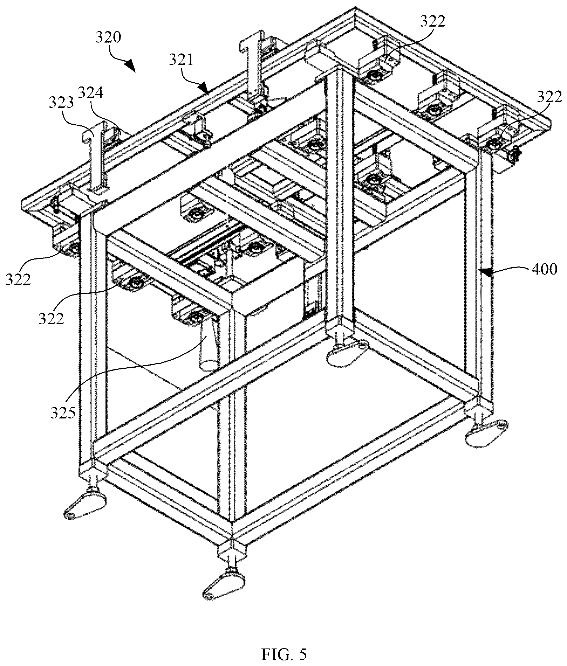

According to some embodiments of the present application, referring to FIG. 5, the material pickup mechanism 320 includes a first support 321 and pickup assemblies 322 disposed on the first support 321. The first support 321 is detachably assembled with the operating mechanism 310, and the pickup assemblies 322 are configured to pick up or release the material 600.

The first support 321 refers to a structure that serves as a skeletal structure in the material pickup mechanism 320 to provide support for other components in the material pickup mechanism 320. The first support 321 is detachably assembled with the operating mechanism 310. For example, the first support 321 is provided with a quick-change plate; alternatively, the first support may be provided with a combination structure of a gripper and a pneumatic cylinder, such that when the operating mechanism 310 approaches the first support 321, the pneumatic cylinder pushes the gripper to clamp one end of the operating mechanism 310.

The pickup assembly 322 refers to a component capable of picking up or releasing the material 600, which may be, but is not limited to, a suction cup, an electromagnetic device, a gripper structure, or the like. When the pickup assembly 322 includes a suction cup, the material 600 is stably adsorbed onto the suction cup through vacuum suction. Meanwhile, a plurality of suction cups may be arranged to provide more stable adsorption of the material 600.

The pickup assembly 322 may be connected to the first support 321 by, but not limited to, a bolting connection, a snap-fit connection, a welding connection, a bonding connection, or the like.

In addition, to reduce the impact force of the pickup assembly 322 on the material 600 during the pickup process, an elastic structure, such as a spring and elastic rubber, may be provided between the pickup assembly 322 and the first support 321 to achieve elastic pickup.

This design, through the introduction of the first support 321 and the pickup assemblies 322, enables the pickup assemblies 322 to be fixed securely, thereby facilitating stable pickup of the material 600.

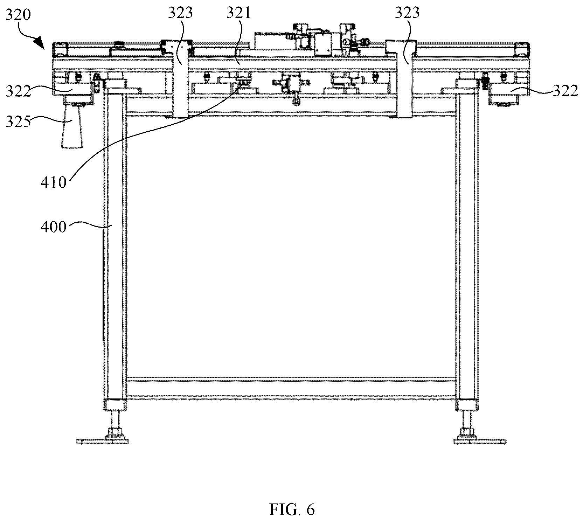

According to some embodiments of the present application, referring to FIG. 6, the material pickup mechanism 320 further includes a distance measuring assembly 325. The distance measuring assembly 325 is disposed on the first support 321, and the distance measuring assembly 325 is configured to acquire a distance between the pickup assembly 322 and the material 600 to be picked up in the storage bin 10.

The distance measuring assembly 325 refers to a device capable of acquiring the distance between the pickup assembly 322 and the material 600 to be picked up, which for example, may be, but is not limited to, a distance measuring sensor, a radar, or the like.

This design, by using the distance measuring assembly 325, enables the acquisition of the distance between the pickup assembly 322 and the material 600, and facilitates accurate control over the downward movement of the pickup assembly 322, thereby achieving accurate material pickup.

According to some embodiments of the present application, referring to FIG. 5, the material pickup mechanism 320 further includes first actuators 324 disposed on the first support 321 and supporting members 323 connected to the first actuators 324. The first actuators 324 are configured to drive the supporting member 323 to move toward or away from the material 600, and the supporting members 323 are configured to support the material 600.

The supporting member 323 refers to a component capable of supporting the material 600 during the material pickup process, and one end of the supporting member may be formed as a bent structure. For example, the supporting member 323 may include a rod part and a supporting part protruding from one surface of the rod part, and the supporting part is disposed at an included angle relative to the rod part.

The first actuator 324 refers to a device configured to provide driving force for the movement of the supporting member 323, which may be, but is not limited to, a pneumatic cylinder, an electric cylinder, a hydraulic cylinder, a combination of an electric motor and a transmission mechanism, or the like. When the pickup assemblies 322 contact the surface of the material 600, the first actuators 324 drive the supporting members 323 to move toward the material 600, such that at least a part of the material 600 is supported on the supporting member 323. After completion of the material pickup, the first actuators 324 drive the supporting members 323 to move away from the material 600.

To ensure more stable support for the material 600, a plurality of supporting members 323 may be arranged, with two of the supporting members 323 being respectively disposed on different sides of the material 600.

This design, by using the first actuators 324 to drive the supporting members 323 during the material pickup process, enables the material 600 to be supported stably, thereby reducing the risk of dropping of material 600 during the material pickup process.

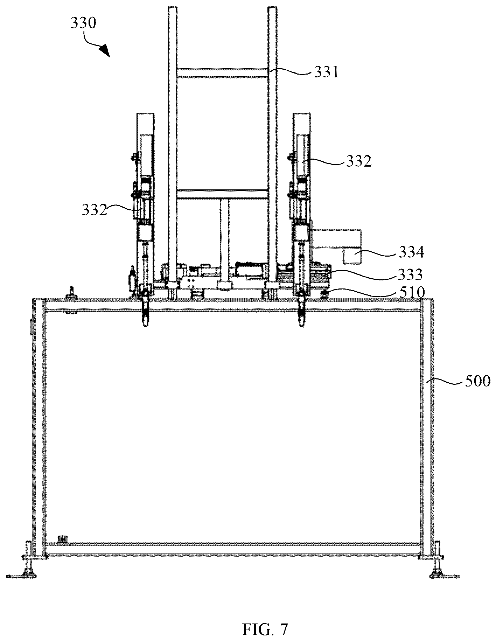

According to some embodiments of the present application, referring to FIG. 7, the tightening mechanism 330 includes a second support 331 and a tightening assembly 332 disposed on the second support 331. The second support 331 is detachably assembled with the operating mechanism 310, and the tightening assembly 332 is configured to rotatably tighten a fastener on the material 600.

The second support 331 refers to a structure that serves as a skeletal structure in the tightening mechanism 330 to provide support for other components in the tightening mechanism 330. The second support 331 is detachably assembled with the operating mechanism 310. For example, the second support 331 is provided with a quick-change plate; alternatively, the second support may be provided with a combination structure of a gripper and a pneumatic cylinder, such that when the operating mechanism 310 approaches the second support 331, the pneumatic cylinder pushes the gripper to clamp one end of the operating mechanism 310.

The tightening assembly 332 refers to a component configured to rotatably tighten the fastener on the material 600, which may be, but is not limited to, a tightening gun, or the like. The fastener may be, but is not limited to, a bolt, a screw, or the like.

The tightening assembly 332 may be connected to the second support 331 by, but not limited to, a bolting connection, a snap-fit connection, a welding connection, a bonding connection, or the like.

In addition, to reduce the impact force of the tightening assembly 332 on the material 600 during the pickup process, an elastic structure, such as a spring and elastic rubber, may be provided between the tightening assembly 332 and the second support 331 to achieve elastic contact.

This design, through the introduction of the second support 331 and the tightening assembly 332, enables the tightening assembly 332 to be fixed securely, thereby facilitating a stable tightening operation.

According to some embodiments of the present application, referring to FIG. 7, the tightening mechanism 330 further includes a second actuator 333. The second actuator 333 is disposed on the second support 331, and the second actuator 333 is configured to drive the tightening assembly 332 to move on the second support 331.

The second actuator 333 refers to a device configured to provide driving force for the movement of the tightening assembly 332, which may be, but is not limited to, a pneumatic cylinder, an electric cylinder, a hydraulic cylinder, a combination of an electric motor and a transmission mechanism, or the like. When the tightening assembly 332 is required to perform a tightening operation at another location, the second actuator 333 drives the tightening assembly 332 to move above the location.

One or a plurality of tightening assemblies 332 may be provided. When a plurality of tightening assemblies 332 are provided, the assembly efficiency can be improved.

This design, by using the second actuator 333 to drive the tightening assembly 332 to move during the tightening operation, enables the tightening assembly 332 to be accurately positioned at the designated tightening location, thereby improving the accuracy of the assembly.

According to some embodiments of the present application, referring to FIG. 7, the tightening mechanism 330 further includes a photographing device 334. The photographing device 334 is disposed on the second support 331 and configured to acquire location information of the fastener on the material 600.

The photographing device 334 refers to a device capable of acquiring the location information of the fastener on the material 600, which for example, may be, but is not limited to, a camera.

This design, through the introduction of the photographing device 334, enables accurate positioning of the designated tightening location, thereby further improving the accuracy of the assembly.

According to some embodiments of the present application, referring to FIG. 6, the battery assembly system further includes a first tooling rack 400 and a first presence detector 410 disposed on the first tooling rack 400. The first tooling rack 400 is configured to support the material pickup mechanism 320, and the first presence detector 410 is configured to detect whether the material pickup mechanism 320 is on the first tooling rack 400.

The first tooling rack 400 refers to a structure configured to store the material pickup mechanism 320, and the shape of the first tooling rack may be designed in multiple ways, such as a cylindrical structure and a square structure.

The first presence detector 410 is capable of detecting whether the material pickup mechanism 320 is on the first tooling rack 400, which may be, but is not limited to, a pressure-sensitive sensor, a photosensitive sensor, a poka-yoke pin, or the like. Specifically, in some embodiments, the first presence detector 410 may include a presence sensor and a presence poka-yoke pin. Through the arrangement of a presence poka-yoke pin, not only the presence of the material pickup mechanism 320 can be detected, but also the material pickup mechanism 320 can be positioned, thereby enabling the material pickup mechanism 320 to be placed on the first tooling rack 400 accurately.

This design, through the introduction of the first tooling rack 400, enables the material pickup mechanism 320 to be stored securely. Meanwhile, through the introduction of the first presence detector 410, the presence status of the material pickup mechanism 320 on the first tooling rack 400 can be accurately determined, thereby facilitating the operating mechanism 310 in determining whether to continue to engage with the material pickup mechanism 320.

According to some embodiments of the present application, referring to FIG. 7, the battery assembly system further includes a second tooling rack 500 and a second presence detector 510 disposed on the second tooling rack 500. The second tooling rack 500 is configured to support the tightening mechanism 330, and the second presence detector 510 is configured to detect whether the tightening mechanism 330 is on the second tooling rack 500.

The second tooling rack 500 refers to a structure configured to store the tightening mechanism 330, and the shape of the second tooling rack may be designed in multiple ways, such as a cylindrical structure and a square structure.

The second presence detector 510 is capable of detecting whether the tightening mechanism 330 is on the second tooling rack 500, which may be, but is not limited to, a pressure-sensitive sensor, a photosensitive sensor, a poka-yoke pin, or the like. Specifically, in some embodiments, the second presence detector 510 may include a presence sensor and a presence poka-yoke pin. Through the arrangement of a presence poka-yoke pin, not only the presence of the tightening mechanism 330 can be detected, but also the tightening mechanism 330 can be positioned, thereby enabling the tightening mechanism 330 to be placed on the second tooling rack 500 accurately.

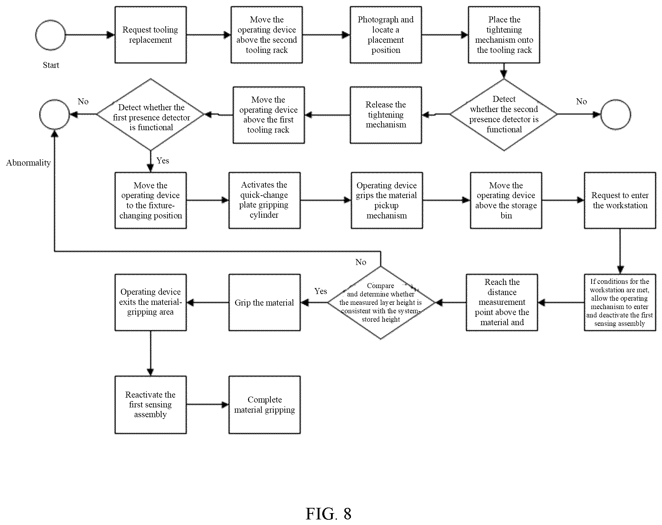

In addition, to facilitate understanding of the control logic of material pickup, reference may be made to FIG. 8. Upon receiving a tooling replacement request instruction, the operating mechanism 310 moves above the second tooling rack 500; the placement position on the second tooling rack 500 is photographed and located; the tightening mechanism 330 is placed on the second tooling rack 500, and a verification is performed to determine whether the second presence detector 510 is functional, for example, whether the presence sensor and the presence poka-yoke pin are functional; if functional, the tightening mechanism 330 is released, and the operating mechanism 310 moves above the first tooling rack 400; a verification is performed to determine whether the first presence detector 410 is functional, for example, whether the presence sensor and the presence poka-yoke pin are functional; if functional, the operating mechanism 310 moves to the fixture-changing position, and activates a quick-change plate gripping cylinder, and the operating mechanism 310 grips the material pickup mechanism 320 to depart; the operating mechanism 310 moves above the storage bin 10 and requests to enter the workstation; if conditions for the workstation are met, the operating mechanism is permitted to enter, and the first sensing assembly 20 is deactivated; the operating mechanism reaches a distance measurement point above the material 600 and range measurement is performed; a comparison is made to determine whether the measured layer height is consistent with the system-stored height; if consistent, the material 600 is gripped, the operating mechanism 310 exits the material-gripping area, and the first sensing assembly 20 is reactivated. In this way, the material gripping is completed.

This design, through the introduction of the second tooling rack 500, enables the tightening mechanism 330 to be stored securely. Meanwhile, through the introduction of the second presence detector 510, the presence status of the tightening mechanism 330 on the second tooling rack 500 can be accurately determined, thereby facilitating the operating mechanism 310 in determining whether to continue to engage with the tightening mechanism 330.

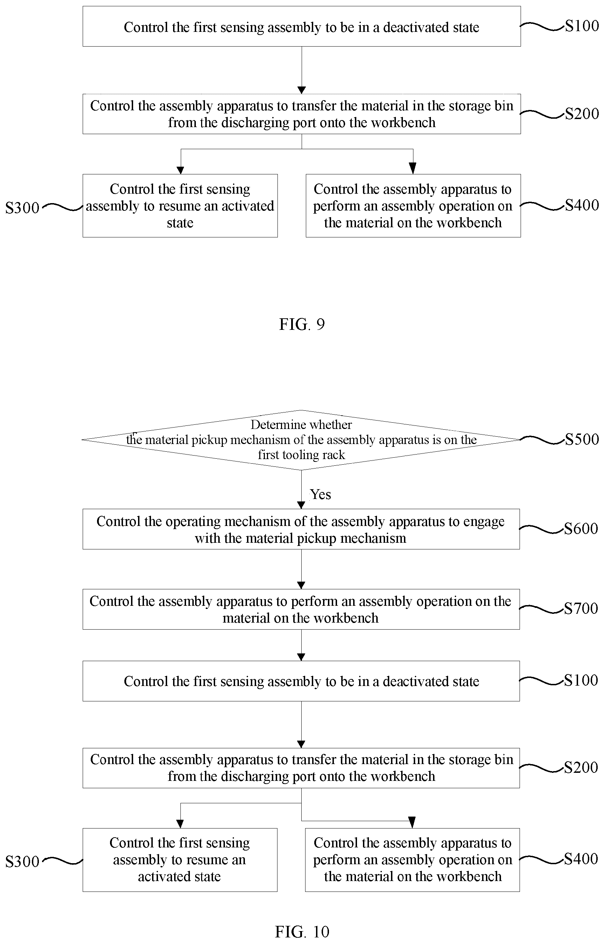

According to some embodiments of the present application, referring to FIG. 9, the present application provides a battery assembly control method applied to the battery assembly system according to any one of the above aspects. The battery assembly control method includes the following steps:
S100, controlling the first sensing assembly 20 to be in a deactivated state;
S200, controlling the assembly apparatus 300 to transfer the material 600 in the storage bin 10 from the discharging port 12 onto the workbench 200;
S300, controlling the first sensing assembly 20 to resume an activated state; and
S400, controlling the assembly apparatus 300 to perform an assembly operation on the material 600 on the workbench 200.

In step S100, the first sensing assembly 20 is deactivated, such that the discharging port 12 is equal to being opened, and in this case, the assembly apparatus 300 can freely move into or out of the discharging port 12 to complete the material pickup process. After completion of the material pickup, step S300 may be executed to enable the first sensing assembly 20 to resume the activated state to form an enclosed protective barrier.

In addition, the execution sequence between step S300 and step S400 may not be limited. For example, step S300 may be executed prior to step S400; or, step S400 may be executed prior to step S300. Additionally, step S300 and step S400 may also be executed simultaneously.

According to the above battery assembly control method, in the assembly process, the first sensing assembly 20 is controlled to be in a deactivated state, such that the assembly apparatus 300 can smoothly enter the storage bin 10 through the discharging port 12 to complete the material pickup operation. After completion of the material pickup, the first sensing assembly 20 is controlled to be in the activated state, so as to restrict the assembly apparatus 300 from mistakenly entering the storage bin 10; meanwhile, the assembly apparatus 300 is controlled to perform an assembly operation on the material 600 on the workbench 200. This design, by using the first sensing assembly 20, can establish a safety control structure at the discharging port 12 of the storage bin 10 for material pickup, such that the material feeding and material discharging can be smoothly completed in the same storage bin 10, and a dedicated one-to-one space configuration is not required, thereby reducing space occupation, increasing space utilization rate, and lowering assembly cost.

According to some embodiments of the present application, referring to FIG. 10, before step S100, controlling the first sensing assembly 20 to be in a deactivated state, the method further includes:
S500, determining whether the material pickup mechanism 320 of the assembly apparatus 300 is on the first tooling rack 400;
S600, in response to a positive determination, controlling the operating mechanism 310 of the assembly apparatus 300 to engage with the material pickup mechanism 320; and
S700, controlling the operating mechanism 310 to move the material pickup mechanism 320 above the discharging port 12 and send a material discharging instruction to the material storage apparatus 100.

In step S500, components such as a sensor and a pin may be used to determine whether the material pickup mechanism 320 is on the first tooling rack 400. If not, it indicates that the material pickup mechanism 320 is missing, and the corresponding tooling should be promptly replenished.

In addition, after step S700 is executed, the first sensing assembly 20 is required to be controlled to maintain the deactivated state. However, the deactivation of the first sensing assembly 20 may occur during the execution of step S100. For example, before step S100 is executed, the material storage apparatus 100 has already received the material discharging instruction and deactivated the first sensing assembly 20; or, the deactivation may occur before the execution of step S100, and in this case, when step S100 is executed, the first sensing assembly 20 is already in the deactivated state.

This design enables the material pickup process to proceed in an orderly and stable manner, thereby ensuring the stable assembly of the material 600.

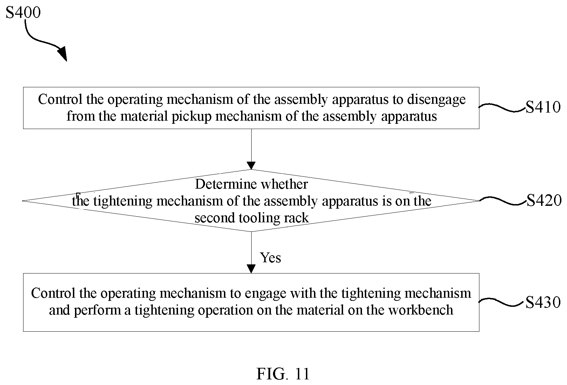

According to some embodiments of the present application, referring to FIG. 11, S400, controlling the assembly apparatus 300 to perform the assembly operation on the material 600 on the workbench 200, includes:
S410, controlling the operating mechanism 310 of the assembly apparatus 300 to disengage from the material pickup mechanism 320 of the assembly apparatus 300;
S420, determining whether the tightening mechanism 330 of the assembly apparatus 300 is on the second tooling rack 500; and
S430, in response to a positive determination, controlling the operating mechanism 310 to engage with the tightening mechanism 330 and perform a tightening operation on the material 600 on the workbench 200.

In step S420, components such as a sensor and a pin may be used to determine whether the tightening mechanism 330 is on the second tooling rack 500. If not, it indicates that the tightening mechanism 330 is missing, and the corresponding tooling should be promptly replenished.

This design enables the tightening process to proceed in an orderly and stable manner, thereby ensuring the stable assembly of the material 600.

According to some embodiments of the present application, the present application provides a battery production system. The battery production system includes the battery assembly system according to any one of the above aspects.

The battery production system described above adopts the above material storage apparatus 100, in which the first sensing assembly 20 is disposed on the storage bin 10, and the first sensing assembly 20 is configured to determine whether the assembly apparatus 300 enters the discharging port 12. This design, by using the first sensing assembly 20, can establish a safety protection structure at the discharging port 12 of the storage bin 10 for material pickup, such that the material feeding and material discharging can be smoothly completed in the same storage bin 10, and a dedicated one-to-one space configuration is not required, thereby reducing space occupation, increasing space utilization rate, and lowering assembly cost.

According to some embodiments of the present application, referring to FIGs. 1 to 11, the present application provides a battery assembly system. The battery assembly system includes an operating mechanism 310, a material pickup mechanism 320, a tightening mechanism 330, and a material storage apparatus 100. The operating mechanism 310 is capable of rapidly switching its configuration between the material pickup mechanism 320 and the tightening mechanism 330. The material storage apparatus 100 includes a storage bin 10, a first sensing assembly 20, and a second sensing assembly 30. The first sensing assembly 20 is disposed at the discharging port 12 of the storage bin 10, and the second sensing assembly 30 is disposed at the feeding port 11 of the storage bin 10, thereby forming an enclosed space to improve the space utilization rate. During the material feeding process, a request button is manually pressed to deactivate the first sensing assembly 20; the clamping cylinder is unlocked manually via a knob switch, and then the handling mechanism 50 is pulled out; the fully loaded handling mechanism 50 is manually pushed in from the feeding port 11, and the guide members 14 are added on two sides to reduce the difficulty of manual operation; after the handling mechanism 50 is manually pushed in, the clamping cylinder is activated manually via a knob switch to clamps the handling mechanism 50; the operating mechanism 310 requests to grip the material, after receiving an ok response from the workstation, the first sensing assembly 20 is deactivated, and the operating mechanism 310 is allowed to enter for material pickup; after material pickup and departing, the operating mechanism 310 transmits a departure signal, and the workstation reactivates the first sensing assembly 20.

The various technical features in the above embodiments may be randomly combined. For brevity, not all possible combinations of the various technical features in the aforementioned embodiments are described. However, provided that combinations of these technical features do not conflict with each other, they all should be considered as falling within the scope of the present specification.

The above embodiments merely illustrate several implementations of the present application, and the description thereof is relatively specific and detailed, but this cannot be construed as limiting the scope of the present application. It should be noted that various changes and modifications can be made by those of ordinary skills in the art without departing from the spirit of the present application, and these changes and modifications are all within the protection scope of the present application. Therefore, the protection scope of the present application should be subject to the appended claims.

## Claims

1. A material storage apparatus, comprising:
a storage bin (10), being provided with an accommodating cavity (13), and a feeding port (11) and a discharging port (12) which are in communication with the accommodating cavity (13), wherein the feeding port (11) is configured to allow a material (600) to pass through and be accommodated in the accommodating cavity (13);
a first sensing assembly (20), wherein the first sensing assembly is disposed on the storage bin (10) and configured to detect an assembly apparatus (300) entering the discharging port (12), and the first sensing assembly (20) is configured to be in a deactivated state when the material storage apparatus receives a material discharging instruction;
a control module, electrically connected to the first sensing assembly (20), wherein the control module controls the assembly apparatus (300) to stop entering the accommodating cavity (13) based on a signal fed back by the first sensing assembly (20); and
a second sensing assembly (30), electrically connected to the control module, wherein the second sensing assembly (30) is configured to detect an object entering the feeding port (11), and the second sensing assembly (30) is configured to be in a deactivated state when the material storage apparatus receives a material feeding instruction.

2. The material storage apparatus according to claim 1, wherein the first sensing assembly (20) comprises a first transmitting end (21) and a first receiving end (22), the first transmitting end (21) and the first receiving end (22) are respectively disposed on two opposite inner walls of the discharging port (12), and a signal path between the first transmitting end (21) and the first receiving end (22) is configured to detect the assembly apparatus (300).

3. The material storage apparatus according to claim 2, wherein the second sensing assembly (30) comprises a second transmitting end (31) and a second receiving end (32), the second transmitting end (31) and the second receiving end (32) are respectively disposed on two opposite inner walls of the feeding port (11), and a signal path between the second transmitting end (31) and the second receiving end (32) is at least configured to sense the object entering the feeding port (11).

4. The material storage apparatus according to any one of claims 1 to 3, wherein the material storage apparatus further comprises a handling mechanism (50), and the handling mechanism (50) is configured to move into or out of the feeding port (11), and transport the material (600) into the accommodating cavity (13) through the feeding port (11).

5. The material storage apparatus according to claim 4, wherein the material storage apparatus further comprises guide members (14), and the guide members (14) are configured to guide access and withdrawal of the handling mechanism (50).

6. The material storage apparatus according to claim 5, wherein the guide members (14) can be rotatably arranged on one of inner walls of the storage bin (10) and the handling mechanism (50), and configured to abut against the other in a rolling manner.

7. The material storage apparatus according to any one of claims 4 to 6, wherein the storage bin (10) is provided with guide elements (15) on two opposite sides of the feeding port (11), and a spacing D between the two guide elements (15) gradually increases from one end of the guide element (15) proximal to the accommodating cavity (13) to another end of the guide element (15) distal to the accommodating cavity (13).

8. The material storage apparatus according to any one of claims 4 to 7, wherein the material storage apparatus further comprises a positioning assembly (40), and the positioning assembly (40) is disposed inside the storage bin (10) and configured to position the handling mechanism (50) at a material feeding station.

9. The material storage apparatus according to any one of claims 1 to 8, wherein the material storage apparatus further comprises a material level detector (17), and the material level detector (17) is configured to detect the material (600) located at a preset position within the storage bin (10).

10. The material storage apparatus according to any one of claims 1 to 9, wherein the material storage apparatus further comprises tilt detectors (16), and the tilt detectors (16) are configured to detect a degree of tilt of the material (600) in the storage bin (10) relative to a horizontal direction.

11. A battery assembly system, comprising:
a workbench (200);
the material storage apparatus according to any one of claims 1 to 10; and
an assembly apparatus (300), configured to transfer the material (600) in the storage bin (10) onto the workbench (200) and perform an assembly operation on the material (600) on the workbench (200).

12. The battery assembly system according to claim 11, wherein the assembly apparatus (300) comprises an operating mechanism (310), a material pickup mechanism (320), and a tightening mechanism (330), the operating mechanism (310) can selectively engage with the material pickup mechanism (320) and the tightening mechanism (330), the operating mechanism (310) transfers the material (600) from the discharging port (12) to the workbench (200) through the material pickup mechanism (320), and the operating mechanism (310) performs a tightening operation on the material (600) on the workbench (200) through the tightening mechanism (330).

13. The battery assembly system according to claim 12, wherein the material pickup mechanism (320) comprises a first support (321) and pickup assemblies (322) disposed on the first support (321), the first support (321) is detachably assembled with the operating mechanism (310), and the pickup assemblies (322) are configured to pick up or release the material (600).

14. The battery assembly system according to claim 13, wherein the material pickup mechanism (320) further comprises a distance measuring assembly (325), the distance measuring assembly (325) is disposed on the first support (321), and the distance measuring assembly (325) is configured to acquire a distance between the pickup assembly (322) and the material (600) to be picked up in the storage bin (10).

15. The battery assembly system according to claim 13 or 14, wherein the material pickup mechanism (320) further comprises first actuators (324) disposed on the first support (321) and supporting members (323) connected to the first actuators (324), the first actuators (324) are configured to drive the supporting member (323) to move toward or away from the material (600), and the supporting members (323) are configured to support the material (600).

16. The battery assembly system according to any one of claims 12 to 15, wherein the tightening mechanism (330) comprises a second support (331) and a tightening assembly (332) disposed on the second support (331), the second support (331) is detachably assembled with the operating mechanism (310), and the tightening assembly (332) is configured to rotatably tighten a fastener on the material (600).

17. The battery assembly system according to claim 16, wherein the tightening mechanism (330) further comprises a second actuator (333), the second actuator (333) is disposed on the second support (331), and the second actuator (333) is configured to drive the tightening assembly (332) to move on the second support (331).

18. The battery assembly system according to claim 16 or 17, wherein the tightening mechanism (330) further comprises a photographing device (334), and the photographing device (334) is disposed on the second support (331) and configured to acquire location information of the fastener on the material (600).

19. The battery assembly system according to any one of claims 12 to 18, wherein the battery assembly system further comprises a first tooling rack (400) and a first presence detector (410) disposed on the first tooling rack (400), the first tooling rack (400) is configured to support the material pickup mechanism (320), and the first presence detector (410) is configured to detect whether the material pickup mechanism (320) is on the first tooling rack (400).

20. The battery assembly system according to any one of claims 12 to 19, wherein the battery assembly system further comprises a second tooling rack (500) and a second presence detector (510) disposed on the second tooling rack (500), the second tooling rack (500) is configured to support the tightening mechanism (330), and the second presence detector (510) is configured to detect whether the tightening mechanism (330) is on the second tooling rack (500).

21. A battery assembly control method, applied to the battery assembly system according to any one of claims 11 to 20, the battery assembly control method comprising the following steps:
controlling the first sensing assembly (20) to be in a deactivated state;
controlling the assembly apparatus (300) to transfer the material (600) in the storage bin (10) from the discharging port (12) onto the workbench (200);
controlling the first sensing assembly (20) to resume an activated state; and
controlling the assembly apparatus (300) to perform an assembly operation on the material (600) on the workbench (200).

22. The battery assembly control method according to claim 21, wherein prior to controlling the first sensing assembly (20) to be in the deactivated state, the method further comprising:
determining whether the material pickup mechanism (320) of the assembly apparatus (300) is on the first tooling rack (400);
in response to a positive determination, controlling the operating mechanism (310) of the assembly apparatus (300) to engage with the material pickup mechanism (320); and
controlling the operating mechanism (310) to move the material pickup mechanism (320) above the discharging port (12).

23. The battery assembly control method according to claim 21 or 22, wherein the step of controlling the assembly apparatus (300) to perform the assembly operation on the material (600) on the workbench (200) comprises:
controlling the operating mechanism (310) of the assembly apparatus (300) to disengage from the material pickup mechanism (320) of the assembly apparatus (300);
determining whether the tightening mechanism (330) of the assembly apparatus (300) is on the second tooling rack (500); and
in response to a positive determination, controlling the operating mechanism (310) to engage with the tightening mechanism (330), and perform a tightening operation on the material (600) on the workbench (200).

24. A battery production system, comprising the battery assembly system according to any one of claims 11 to 20.
